# EUROPÄISCHE PATENTSCHRIFT

(11) **EP 2 650 155 B1**
(45) Veröffentlichungstag und Bekanntmachung des Hinweises auf die Patenterteilung: **02.07.2014**
(21) Anmeldenummer: 12163910.8
(22) Anmeldetag: 12.04.2012
(51) Int. Cl.: B60H 1/28, B62D 25/08

(54) **Wasserkasten für ein Kraftfahrzeug**
Water chamber for a motor vehicle
Réservoir d'eau pour un véhicule automobile

(43) Veröffentlichungstag der Anmeldung: 16.10.2013
(73) Patentinhaber: Weidmann Plastics Technology AG, 8640 Rapperswil (CH)
(72) Erfinder: Bölsterli, Christian, 8635 Dürnten (CH); Dal Vecchio, Piero, 8734 Ermenswil (CH); Müller, Armin, 8722 Kaltbrunn (CH); Harke, Stefan, 8832 Wollerau (CH)
(74) Vertreter: Rutz, Andrea

(56) Entgegenhaltungen:
- EP-A2- 2 052 893
- DE-B3-102004 051 198
- DE-C1- 19 923 193
- FR-A- 1 280 008
- FR-A1- 2 878 809

## Beschreibung

Die Erfindung betrifft einen Wasserkasten für ein Kraftfahrzeug gemäss Oberbegriff des Anspruchs 1.

Wasserkästen dieser Art werden bei Kraftfahrzeugen insbesondere unterhalb der Motorschutzhaube angeordnet und dienen dazu, für die Klimatisierung des Fahrzeuginneren Frischluft aus der Umgebung anzusaugen. Beispielsweise bei Regen ist die angesaugte Frischluft mit Wassertropfen beladen. Zudem kann in der Ansaugöffnung Schwallwasser in den Wasserkasten eintreten. Damit der Klimaanlage möglichst trockene Luft zugeführt werden kann, sollen im Wasserkasten sowohl Schwallwasser als auch Wassertropfen bzw. Aerosole aus der Frischluft möglichst wirkungsvoll in die Wasserablauföffnung in der Bodenwand geleitet und dort abgeführt werden. Der Wirkungsgrad der Wasserabscheidung sollte möglichst hoch sein, so dass möglichst wenig Wassertropfen in das Fahrzeuginnere und insbesondere in den Luftfilter der Klimaanlage gelangt. Ein zunehmend wichtiger Aspekt eines solchen Wasserkastens ist der Energieaufwand, der erforderlich ist, um die Frischluft anzusaugen und der Klimaanlage zuzuführen. In der Regel wird die Frischluft mittels eines Gebläses angesaugt. Der Energieverbrauch ist insbesondere abhängig vom Widerstand, den die angesaugte Frischluft im Wasserkasten erfährt. Durch eine Vergrösserung des Wasserkastens kann dieser Widerstand verkleinert werden. Dem steht jedoch die Anforderung gegenüber, nach welcher das Bauvolumen eines Wasserkastens möglichst klein sein sollte.

Ein Wasserkasten der genannten Art ist im Stand der Technik durch die DE-C-199 23 193 bekannt geworden. Um den Wirkungsgrad der Wasserabscheidung zu verbessern, ist in der Umlenkkammer oberhalb der Luftaustrittsöffnung ein luftdurchlässiger Dachkörper angeordnet. Dieser liegt einerseits an einer Rückwand und andererseits an einer Vorderwand an und bildet mit Seitenwänden Strömungsöffnungen. Am Dachkörper, der hier das Umlenkorgan bildet, wird die durch den Wasserkasten durchströmende Luft mit zwei quer zueinander orientierten Richtungen umgelenkt. Der hohe Wirkungsgrad soll dadurch erreicht werden, dass die meisten der in der Frischluft mitgeführten Wassertropfen der doppelten Umlenkung am Dachkörper nicht folgen können. Es wird angenommen, dass aufgrund ihrer Massenträgheit die Wassertropfen nach unten in die Wasserablauföffnung gelangen.

Durch die DE-B-10 2004 051 198 ist ein Wasserkasten bekannt geworden, der aus einer Wasserabscheidekammer und einer Tropfenabscheidekammer besteht. In der Wasserabscheidekammer soll vor allem Schwallwasser und in der Tropfenabscheidekammer aus der Luft Tropfen abgeschieden werden. Ein Wasserkasten mit zwei Kammern ist in der Herstellung vergleichsweise aufwendig und besitzt ein vergleichsweise grosses Bauvolumen. Der Widerstand und damit der Energieverbrauch dürften hier vergleichsweise hoch sein.

Der Erfindung liegt die Aufgabe zugrunde, einen Wasserkasten der genannten Art zu schaffen, der eine Wasserabscheidung mit hohem Wirkungsgrad ermöglicht, und der dennoch mit vergleichsweise kleinem Bauvolumen hergestellt werden kann. Zudem soll der Wasserkasten einen vergleichsweise kleinen Widerstand aufweisen und damit im Gebrauch einen vergleichsweise kleinen Energieverbrauch gewährleisten.

Die Aufgabe ist bei einem gattungsgemässen Wasserkasten dadurch gelöst, dass sich das Umlenkorgan im Wesentlichen von der Deckenwand zur Bodenwand erstreckt, dass die Lufteintrittsöffnung in der Vorderwand und die Luftaustrittsöffnung in der Rückwand angeordnet sind und dass zwischen wenigstens einer Seitenwand der Umlenkkammer und einer Seitenkante des Umlenkorgans eine Strömungsöffnung angeordnet ist. Beim erfindungsgemässen Wasserkasten strömt die Luft im Wesentlichen horizontal durch die Umlenkkammer hindurch. Durch die Lufteintrittsöffnung in die Umlenkkammer strömende Frischluft wird am Umlenkorgan umgelenkt und gelangt in die Luftaustrittsöffnung. An der Vorderseite des Umlenkorgans wird Schwallwasser umgelenkt und zur Wasserablauföffnung geleitet. Gleichzeitig werden an dieser Vorderseite Wassertropfen aus der Luft abgeschieden und diese gelangen aufgrund ihrer Massenträgheit nach unten und ebenfalls in die genannte Wasserablauföffnung. Nach einer Weiterbildung der Erfindung erstreckt sich das Umlenkorgan im Wesentlichen in vertikaler Richtung.

Der Wirkungsgrad der Wasserabscheidung ist dann besonders hoch, wenn gemäss einer Weiterbildung der Erfindung die Wasserablauföffnung zwischen dem Umlenkorgan und der Rückwand angeordnet ist. Die Wasserablauföffnung befindet sich dann somit auf der Leeseite des Umlenkorgans.

Eine weitere Erhöhung des Wirkungsgrades der Wasserabscheidung wird dann erreicht, wenn gemäss einer Weiterbildung der Erfindung das Umlenkorgan eine zweite Seitenkante aufweist, die mit einer zweiten Seitenwand der Umlenkkammer eine zweite Strömungsöffnung bildet. Diese Strömungsöffnungen sind vorzugsweise im Wesentlichen symmetrisch angeordnet, so dass die in die Umlenkkammer einströmende Frischluft symmetrisch aufgeteilt wird. Das Umlenkorgan ist hier insbesondere giebeldachförmig ausgebildet. Der First des Giebeldaches erstreckt sich dann im Wesentlichen vertikal. Die beiden Teile des Giebeldaches sind vorzugsweise an der Vorderseite konkav ausgebildet.

Nach einer Weiterbildung der Erfindung ist vorgesehen, dass das Umlenkorgan an der Seitenkante eine sich im Wesentlichen vertikal erstreckende Rinne aufweist, die zur Vorderwand hin offen ist und in der Wasser nach unten rinnen kann. In dieser Rinne kann sich das abgeschiedene Wasser sammeln und gelangt in dieser nach unten und schliesslich in die Wasserablauföffnung. Diese Rinne kann an der Unterseite offen sein, so dass das Wasser hier effizient ausströmen kann.

Ein besonders geringer Strömungswiderstand kann dann erreicht werden, wenn gemäss einer Weiterbildung der Erfindung die Lufteintrittsöffnung und die Luftaustrittsöffnung im Wesentlichen auf gleicher Höhe über der Bodenwand angeordnet sind. Diese beiden Öffnungen sind hier somit gegenüberliegend angeordnet. Die angesaugte Frischluft strömt im Wesentlichen horizontal von der Lufteintrittsöffnung in die Luftaustrittsöffnung.

Nach einer Weiterbildung der Erfindung ist vorgesehen, dass die Bodenwand so konisch ausgebildet ist, dass sich die Wasserablauföffnung an einer untersten Stelle der Bodenwand befindet. Das Schwallwasser und das aus der Luft ausgeschiedene Wasser gelangen dann besonders effizient zur Wasserablauföffnung.

Nach einer Weiterbildung der Erfindung ist vorgesehen, dass die Umlenkkammer wenigstens teilweise zwischen Wänden gerundete Kanten aufweist. Damit kann der Widerstand und damit der Energieverbrauch weiter gesenkt werden.

Nach einer Weiterbildung der Erfindung ist vorgesehen, dass das Umlenkorgan wenigstens ein Teil aufweist, das zwischen einer ersten und einer zweiten Position verstellbar ist, wobei dieses Teil in der ersten Position zur Wasserabscheidung strömende Luft umlenkt und in der zweiten Position einen Durchgang freigibt, so dass die Luft möglichst ungehindert die Umlenkkammer durchströmen kann. Ist die Umgebungsluft trocken, beispielsweise bei regenfreiem Wetter im Sommer, so ist eine Wasserabscheidung im Wasserkasten nicht erforderlich. In diesem Fall ist wenigstens ein Teil des Umlenkorgans in einer Position, in der es der durchströmenden Luft keinen Widerstand bietet. Dieses Teil ist beispielsweise eine Wandung, die in der zweiten Position parallel zur Durchströmrichtung ausgerichtet ist. Nach einer Weiterbildung der Erfindung ist dieses wenigstens eine Teil um eine im Wesentlichen vertikale Achse verschwenkbar. Vorzugsweise sind zwei Teile vorgesehen, die das Umlenkorgan bilden und die zwischen zwei Positionen verschwenkbar sind. In der einen Position bilden sie das Umlenkorgan, an dem wie oben erläutert Wasser aus der Frischluft abgeschieden wird. In der anderen Position sind diese beiden Teile so verschwenkt, dass diese im Wesentlichen keine Umlenkung der durchströmenden Luft bewirken. Nach einer Weiterbildung der Erfindung sind die beiden Teile ähnlich einer Flügeltür spiegelbildlich zueinander verschwenkbar.

Nach einer Weiterbildung der Erfindung ist das wenigstens eine bewegliche Teil des Umlenkorgans, beispielsweise mittels eines Feuchtigkeitssensors gesteuert. Das genannte Teil ist dann beispielsweise so gesteuert, dass dieses in eine inaktive Position weggeschwenkt wird, wenn der Feuchtigkeitsgehalt unter einen vorbestimmten Wert fällt. Überschreitet der Feuchtigkeitswert die genannte Grenze, so wird das genannte Teil wieder in die aktive bzw. umlenkende Position bewegt, beispielsweise verschwenkt.

Nach einer Weiterbildung der Erfindung ist vorgesehen, dass wenigstens eine Seitenkante des Umlenkorgans gemäss dem Coandä-Effekt gerundet ist. Dadurch wird das abzuscheidende Wasser und/oder Luft besonders wirksam um das Umlenkorgan herum in die Wasserablauföffnung geleitet. Mit diesem Effekt kann insbesondere eine verbesserte Umlenkung erreicht und ein unerwünschter Strömungsabriss vermieden werden.

Nach einer Weiterbildung der Erfindung liegt das Umlenkorgan mit seiner Oberseite an der Deckenwand und/oder mit seiner Unterseite an der Bodenwand an oder ist unmittelbar mit der Deckenwand und/oder Bodenwand verbunden. Bevorzugt liegt das Umlenkorgan mit seiner Oberseite durchgehend an der Deckenwand an oder ist durchgehend unmittelbar mit der Deckenwand verbunden, d.h. es gibt zwischen dem Umlenkorgan und der Deckenwand keinen Spalt bzw. keine Durchbrechungen. Alternativ oder zusätzlich liegt das Umlenkorgan mit seiner Unterseite bevorzugt durchgehend an der Bodenwand an oder ist durchgehend unmittelbar mit der Bodenwand verbunden. Dadurch wird in den decken- bzw. bodennahen Bereichen sämtliche vorbeiströmende Frischluft am Umlenkorgan umgelenkt. Wenn das Umlenkorgan sowohl durchgehend an der Deckenwand als auch durchgehend an der Bodenwand anliegt bzw. unmittelbar mit diesen Wänden verbunden ist, wird sogar sämtliche eintretende Frischluft am Umlenkorgan umgelenkt und gelangt erst danach in die Luftaustrittsöffnung. An der Vorderseite des Umlenkorgans wird dabei sämtliches Schwallwasser umgelenkt und zur Wasserablauföffnung geleitet. In alternativen Ausgestaltungen ist es aber auch denkbar, dass die Oberseite und/oder Unterseite des Umlenkorgans zumindest bereichsweise zur Deckenwand bzw. Bodenwand beabstandet ist. Dabei kann das Umlenkorgan an seiner Oberseite und/oder Unterseite z.B. auch seitlich mit mindestens einer der Seitenwände verbunden sein, ohne dass eine unmittelbare Verbindung zwischen dem Umlenkorgan und der Deckenwand bzw. Bodenwand besteht.

Die Erfindung betrifft zudem ein Kraftfahrzeug mit einem erfindungsgemässen Wasserkasten. Der Wasserkasten ist an eine Luftansaugvorrichtung angeschlossen, mit der angesaugte Frischluft in den Fahrgastraum abgebbar ist. Die Luftansaugvorrichtung ist vorzugsweise ein Teil einer Klimaanlage und besitzt ein an sich übliches Gebläse.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: einen horizontalen Schnitt durch einen schematisch dargestellten erfindungsgemässen Wasserkasten,
- Fig. 2: einen vertikalen Schnitt durch den Wasserkasten entlang der Linie II-II der Fig. 1,
- Fig. 3: einen Schnitt durch den Wasserkasten entlang der Linie III-III der Fig. 1,
- Fig. 4: einen Schnitt gemäss Fig. 1, wobei jedoch das Umlenkorgan nicht aktiv ist, die Frischluft somit im Wesentlichen ungehindert durch den Wasserkasten hindurch strömen kann,
- Fig. 5: einen horizontalen Schnitt durch einen schematisch dargestellten Wasserkasten gemäss einer Variante,
- Fig. 6: einen horizontalen Schnitt durch einen schematisch dargestellten Wasserkasten gemäss einer weiteren Variante,
- Fig. 7: einen Schnitt gemäss Fig. 6, wobei auch hier das Umlenkorgan sich in einer nicht aktiven Position befindet,
- Fig. 8: einen horizontalen Schnitt durch einen schematisch dargestellten Wasserkasten gemäss einer weiteren Variante, und
- Fig. 9: einen Längsschnitt durch ein nur stark schematisch dargestelltes Kraftfahrzeug mit einem Wasserkasten gemäss einer weiteren Variante.

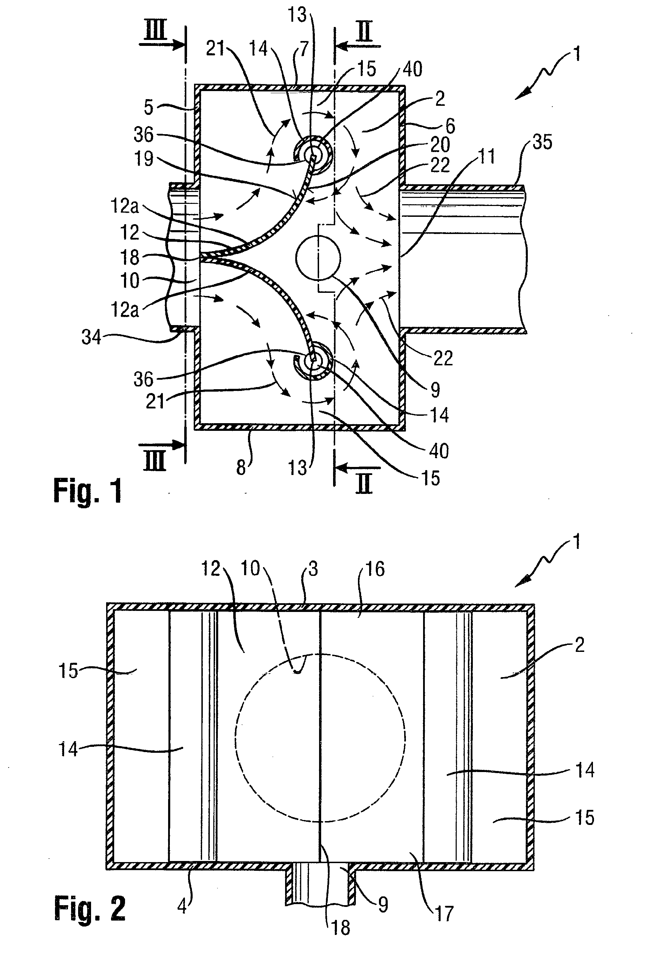

Der in den Fig. 1 bis 4 gezeigte Wasserkasten 1 besitzt eine Umlenkkammer 2, die eine Deckenwand 3, eine Bodenwand 4, eine Vorderwand 5, eine Rückwand 6 und zwei im Wesentlichen parallel zueinander verlaufende Seitenwände 7 und 8 aufweist. Die Vorderwand 5 besitzt eine Lufteintrittsöffnung 10, an welcher angesaugte Frischluft in die Umlenkkammer 2 eingeleitet werden kann. Die Vorderwand 5 ist über ein Rohr 34 mit einer hier nicht gezeigten Ansaugöffnung verbunden, die beispielsweise unterhalb einer Windschutzscheibe angeordnet und mit einem hier nicht gezeigten Gitter abgedeckt ist. Das Rohr 34 kann, wie gezeigt, im Querschnitt rund sein. Der Querschnitt kann aber auch eine andere Form aufweisen, beispielsweise kann der Querschnitt rechteckig sein. Die Lufteintrittsöffnung 10 kann sich auch über die gesamte Höhe der Vorderwand 5 erstrecken. In der Fig. 1 strömt die Luft somit von links nach rechts in die Umlenkkammer 2.

Die angesaugte Frischluft durchströmt die Umlenkkammer 2 und verlässt diese durch eine Luftaustrittsöffnung 11, die in der Rückwand 6 angeordnet ist. Diese Luftaustrittsöffnung 11 ist über ein Rohr 35 mit einer hier nicht gezeigten und an sich üblichen Klimaanlage verbunden. Das Rohr 35 kann ebenfalls im Querschnitt kreisrund oder beispielsweise auch rechteckig sein. In der erwähnten und hier nicht gezeigten Klimaanlage befindet sich üblicherweise ein Gebläse zum Ansaugen der Frischluft, ein Luftfilter und Mittel zum Heizen oder Kühlen der Frischluft. Die Klimaanlage befindet sich in der Regel im Fahrgastraum, während der Wasserkasten 1 sich beispielsweise im Motorraum befindet. Der Wasserkasten 1 ist wie ersichtlich im Wesentlichen geschlossen. Die ausströmende Luft strömt in Fig. 1 von links nach rechts. Die einströmende Luft und die ausströmende Luft strömen somit im Wesentlichen in der gleichen Richtung. Im eingebauten Zustand ist diese Strömung im Wesentlichen horizontal. In der Umlenkkammer 2 wird die Frischluft, die an der Lufteintrittsöffnung 10 angesaugt wird, umgelenkt, so dass sie möglichst weitgehend Wasser abscheidet. Das Wasser kann als Schwallwasser und/oder als Tropfen anfallen. Die Umlenkkammer 2 kann somit von einer 2-Phasen Strömung durchströmt sein, was insbesondere bei regnerischem Wetter der Fall ist.

Zum Abscheiden des Wassers ist in der Bodenwand 4 gemäss Fig. 1 eine Wasserablauföffnung 9 angeordnet. Diese Wasserablauföffnung 9 befindet sich hinter einem Umlenkorgan 12. Die Bodenwand 4 kann eben oder auch konisch ausgebildet sein, so dass sich die Wasserablauföffnung 9 an der tiefsten Stelle der Bodenwand 4 befindet. Das Umlenkorgan 12 ist giebeldachförmig ausgebildet und erstreckt sich vertikal von der Deckenwand 3 zur Bodenwand 4. Das Umlenkorgan 12 liegt mit einer Oberseite 16 durchgehend an der Deckenwand 3 und mit einer Unterseite 17 durchgehend an der Bodenwand 4 an. Es besteht aus zwei im Wesentlichen spiegelsymmetrischen Teilen 12a, die sich in einer sich vertikal erstreckenden Frontkante 18 treffen. Die Teile 12a besitzen jeweils eine konkave Vorderseite 19 und eine konvexe Rückseite 20. Im Abstand zur Frontkante 18 besitzen die beiden Teile 12a jeweils eine sich ebenfalls vertikal erstreckende Seitenkante 13. Diese sind jeweils von einer Rinne 14 umgeben, die sich vertikal erstrecken und jeweils zur Vorderwand 5 hin offen sind. Die entsprechenden Öffnungen 36 sind schlitzförmig und erstrecken sich vorzugsweise über die gesamte Höhe der Umlenkkammer 2.

Wird an der Lufteintrittsöffnung 10 Frischluft angesaugt, so strömt diese gemäss den Pfeilen 21 gegen das Umlenkorgan 12 und wird an der Frontkante 18 im Wesentlichen zu gleichen Teilen und spiegelsymmetrisch aufgeteilt. Die beiden Teilströme umströmen etwa kreisförmig jeweils die entsprechende Rinne 14 und gelangen hinter das Umlenkorgan 12. Schwallwasser wird an dem Umlenkorgan 12 umgelenkt und gelangt schliesslich entlang der Bodenwand 4 in die Wasserablauföffnung 9. Hierbei wird in an sich bekannter Weise der Coand 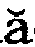 -Effekt wirksam. Die mit der Frischluft transportierten Wassertropfen und Aerosole treffen an die Vorderseiten 19 auf und gelangen teilweise durch die Öffnungen 36 in die Rinnen 14. Diese Wassertropfen fliessen entlang den Vorderseiten 19 und in den Rinnen 14 nach unten und gelangen schliesslich zur Wasserablauföffnung 9, durch die sie die Umlenkkammer 2 verlassen. Die von Schwallwasser und weitgehend auch von Wassertropfen befreite Frischluft gelangt gemäss den Pfeilen 22 in die Luftaustrittsöffnung 11 und schliesslich zu der hier nicht gezeigten Klimaanlage. Vorzugsweise sind in den Rinnen 14 ebenfalls Ablauföffnungen 40 vorgesehen, durch welche Schwallwasser und/oder Wassertropfen abfliessen kann bzw. können.

Damit die Frischluft das Umlenkorgan 12 umströmen kann, sind die beiden Rinnen 14 so angeordnet, dass sich zwischen diesen und einer Seitenwand 7 bzw. Seitenwand 8 eine Strömungsöffnung 15 vorhanden ist. Der Abstand zwischen den beiden Rinnen 14 ist wesentlich grösser als der Abstand der Rinnen 14 zur nächstliegenden Seitenwand 8 bzw. 7. Vorzugsweise erstrecken sich diese Strömungsöffnungen 15 jeweils über die gesamte Höhe der Umlenkkammer 2 und somit jeweils von der Bodenwand 4 zur Deckenwand 3.

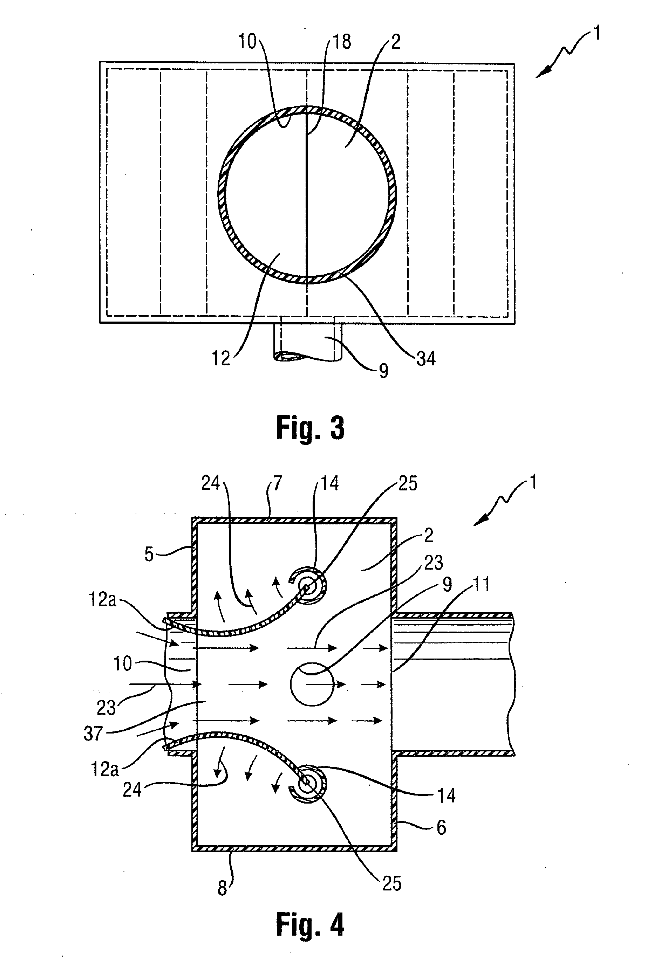

Die beiden Teile 12a können gemäss der Fig. 4 jeweils um eine Schwenkachse 25 schwenkbar sein. Die Teile 12a können insbesondere von der in Fig. 1 gezeigten ersten Stellung in die in Fig. 4 gezeigte zweite Stellung verschwenkt werden. In der in Fig. 4 gezeigten zweiten Stellung sind die beiden Teile 12a nach aussen geschwenkt, so dass sich zwischen diesen ein Durchlass 37 befindet. Dieser Durchlass 37 ermöglicht es, dass die angesaugte Frischluft gemäss den Pfeilen 23 im Wesentlichen ungehindert die Umlenkkammer 2 durchströmen kann. Beim Verschwenken der Teile 12a in Richtung der Pfeile 24 werden vorzugsweise gleichzeitig auch die Rinnen 14 verschwenkt, die in diesem Fall fest mit den Teilen 12a verbunden sind. Die beiden Teile 12a können somit ähnlich wie Flügeltüren verschwenkt werden. Das Verschwenken kann von Hand oder auch motorisch erfolgen. Die in Fig. 4 gezeigte Stellung der beiden Teile 12a ist dann vorgesehen, wenn die angesaugte Frischluft vergleichsweise trocken ist, eine Wasserabscheidung somit nicht notwendig ist. Das Verschwenken kann aufgrund eines hier nicht gezeigten Sensors, beispielsweise aufgrund eines Feuchtesensors erfolgen. Das Verschwenken erfolgt beispielsweise aufgrund eines gegebenen Wertes, beispielsweise eines vorgegebenen Feuchtigkeitsgehaltes der angesaugten Frischluft. Der Sensor kann beispielsweise in der Lufteintrittsöffnung 10 oder in der Luftaustrittsöffnung 11 angeordnet sein. Die Anordnung der Teile 12a gemäss Fig. 4 hat den wesentlichen Vorteil, dass der Luftwiderstand in der Umlenkkammer 2 wesentlich kleiner ist als bei der Anordnung gemäss den Fig. 1 bis 3. Da der Widerstand wesentlich kleiner ist, ist für das Ansaugen der Frischluft, beispielsweise durch ein elektrisch betriebenes Gebläse, entsprechend weniger Energie erforderlich.

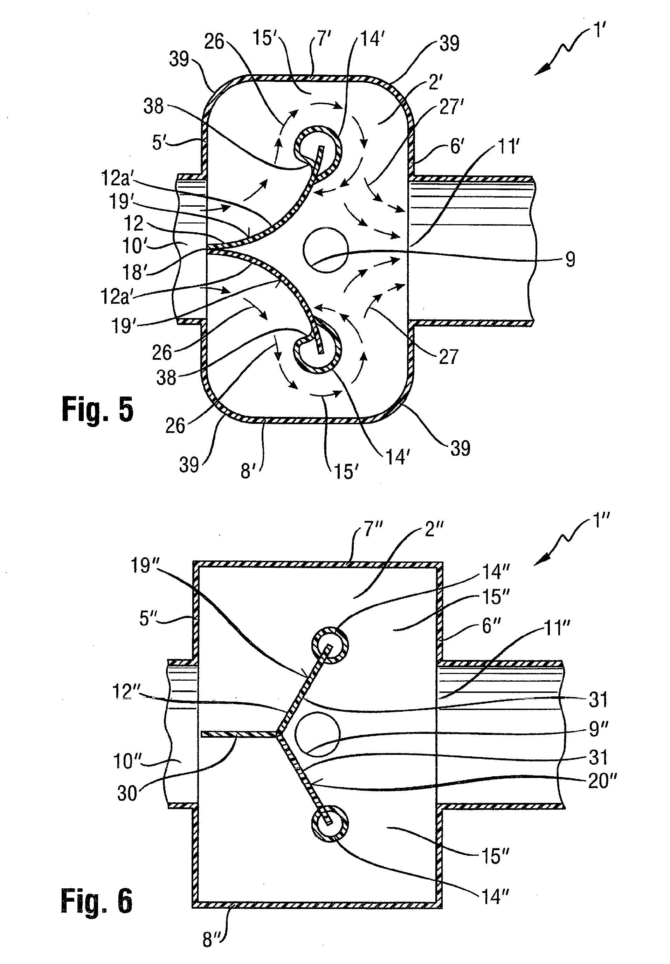

Die Fig. 5 zeigt einen Wasserkasten 1', der grundsätzlich ähnlich wie der Wasserkasten 1 ausgebildet ist. Die hier vorgesehenen Wasserrinnen 14' sind zumindest im Querschnitt gesehen jedoch geschlossen und bilden jeweils eine Mulde 38, die sich jeweils an eine Vorderseite 19' anschliesst. Die im Querschnitt etwa tropfenförmig ausgebildeten Rinnen 14' sind so ausgebildet, dass sie einen besonders hohen Coandä-Effekt bewirken. Schwallwasser und an der Vorderseite 19' abgelagerte Wassertropfen können somit besonders effizient gemäss den Pfeilen 26 das Umlenkorgan 12 umströmen und in die Wasserablauföffnung 9 geleitet werden. Die abgetrocknete Luft kann gemäss den Pfeilen 27 den Wasserkasten 1' verlassen. Der Wasserkasten 1' besitzt zudem wie ersichtlich gerundete Kanten 39, welche die Vorderwand 5' mit den Seitenwänden 7' und 8' bzw. die Rückwand 6' mit der Seitenwand 7' bzw. 8' verbinden. Diese gerundeten Kanten 39 vermindern ebenfalls den Widerstand in der Umlenkkammer 2' und verbessern zudem das Ableiten von Wasser in die Wasserablauföffnung 9. Die beiden Teile 12a können hier ebenfalls verschwenkbar sein. Dies ist aber nicht zwingend. Die beiden Teile 12a können hier somit auch fest montiert sein. Dies gilt ebenfalls für die Teile 12a des Wasserkastens 1.

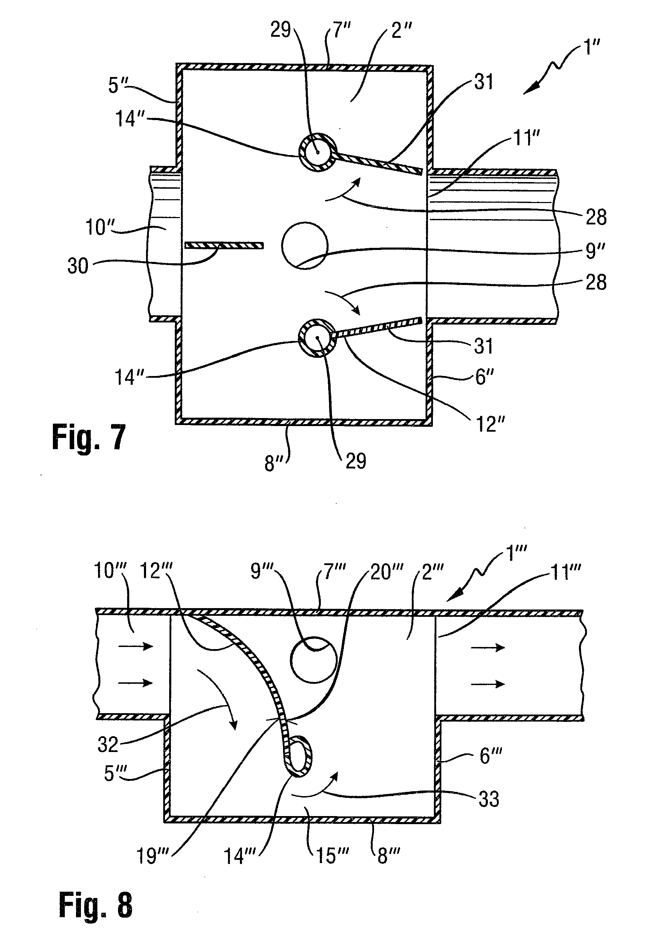

Der in den Fig. 6 und 7 gezeigte Wasserkasten 1" besitzt ein Umlenkorgan 12", das im Schnitt gesehen sternförmig ausgebildet ist. Das Umlenkorgan 12" besteht aus einer fest montierten Wand 30 und zwei begrenzt schwenkbaren wandförmigen Teilen 31. Die Teile 31 sind jeweils mit einer im Querschnitt etwa kreisförmigen Rinne 14" verbunden. Diese Rinnen 14" können jeweils zusammen mit dem Teil 31 von der in Fig. 6 gezeigten Stellung um eine Achse 29 in die in Fig. 7 gezeigte Stellung verschwenkt werden. Diese Schwenkung ist in Fig. 7 mit den Pfeilen 28 angedeutet. Sind die Teile 31 gemäss Fig. 7 weggeschwenkt, so verlaufen sie im Wesentlichen parallel zur Strömungsrichtung. Bei der Anordnung gemäss Fig. 7 kann die Frischluft mit sehr geringem Widerstand von der Lufteintrittsöffnung 10" zur Luftaustrittsöffnung 11" gelangen. Die Stellung gemäss Fig. 7 ist auch hier bei vergleichsweise trockener Aussenluft vorgesehen.

Der Wasserkasten 1"' gemäss Fig. 8 besitzt ein Umlenkorgan 12'", das sich von einer Seitenwand 7'" nach innen in eine Umlenkkammer 2"' erstreckt. Das Umlenkorgan 12"' besitzt eine konkave Vorderseite 19'" und eine konvexe Rückseite 20"'. An einer freien sich vertikal erstreckenden Kante ist am Umlenkorgan 12"' eine Rinne 14" angeordnet, die im Querschnitt geschlossen ist. Grundsätzlich könnte diese Rinne 14'" aber auch gemäss Fig. 1 offen sein. Die konkave Vorderseite 19'" und die daran anschliessende Rinne 14"' sind im Hinblick auf den Coand 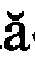 -Effekt gerundet ausgebildet. Wasser und Frischluft gelangen somit gemäss Pfeil 32 an der Vorderseite 19" entlang zur Rinne 14"' und umströmt diese gemäss Pfeil 33. Wasser und Frischluft durchströmen hierbei eine Strömungsöffnung 15"', die sich zwischen der Rinne 14"' und einer Seitenwand 8"' befindet. Schliesslich wird das abgeschiedene Wasser entlang der konvexen Rückseite 20'" zur Wasserablauföffnung 9'" geleitet. Die Frischluft gelangt schliesslich durch die Luftaustrittsöffnung 11'" zu der hier nicht gezeigten Klimaanlage. Die Lufteintrittsöffnung 10'" und die Luftaustrittsöffnung 11'" sind ebenfalls gegenüberliegend angeordnet. Die angesaugte Frischluft durchströmt die Umlenkkammer 2'" ebenfalls im Wesentlichen horizontal. Das Umlenkorgan 12'" kann fest oder auch schwenkbar angeordnet sein.

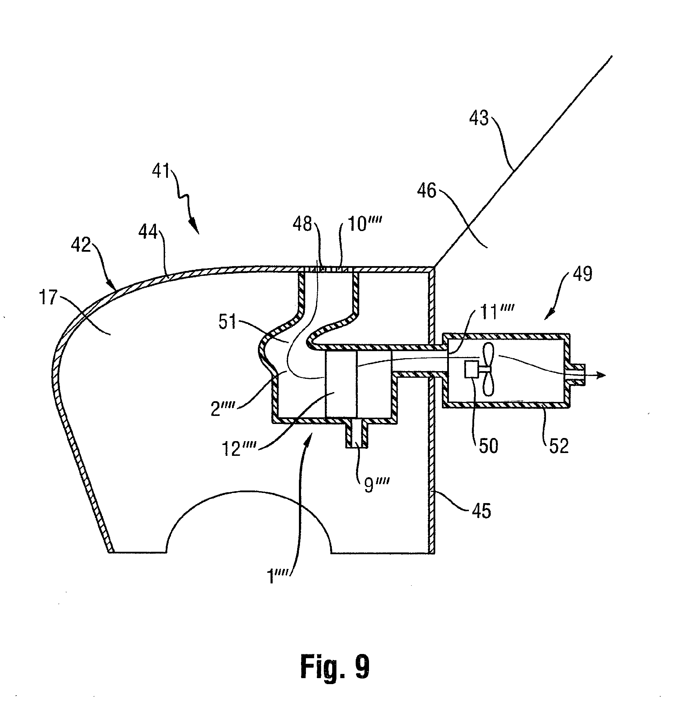

Das in Fig. 9 beispielhaft und stark schematisiert gezeigte Kraftfahrzeug 41 weist in üblicher Weise eine Karosserie 42, eine Windschutzscheibe 43 und eine Motorhaube 44 auf. In einer Öffnung der Motorhaube 44 ist ein Gitter 48 angeordnet. Eine Stirnwand 45 trennt den Innenraum des Kraftfahrzeuges 41 in einen Fahrgastraum 46 und einen Motorraum 47. Unterhalb der Motorhaube 44 ist im Motorraum 47 ein Wasserkasten 1"" angeordnet. Der Wasserkasten 1"" weist eine Lufteintrittsöffnung 10"", eine Luftaustrittsöffnung 11"", eine Wasserablauföffnung 9"" sowie eine Umlenkkammer 2"" auf. In der Umlenkkammer 2"" ist ein Umlenkorgan 12"" angeordnet. Der Wasserkasten 1"" erstreckt sich durch eine Öffnung in der Stirnwand 45 und ist mit einer im Fahrgastraum 46 angeordneten Luftansaugvorrichtung 49 verbunden, die in den Fahrgastraum 46 mündet. Im Gehäuse 52 der Luftansaugvorrichtung 49 ist ein Gebläse 50 angeordnet. Mittels des Gebläses 50 wird, wie durch den Pfeil 51 angedeutet, an der Lufteintrittsöffnung 10"" des Wasserkastens 1"" Luft angesaugt, durch den Wasserkasten 1"" sowie durch die Luftansaugvorrichtung 49 hindurch transportiert und in den Fahrgastraum abgegeben. Am Umlenkorgan 2"" wird die durch den Wasserkasten 1"" hindurchströmende Luft umgelenkt, so dass diese möglichst weitgehend Wasser abscheidet, welches den Wasserkasten 1"" über die Wasserablauföffnung 9"" verlässt. Ebenfalls über die Lufteintrittsöffnung 10"" in den Wasserkasten 1"" eintretendes Schwallwasser wird ebenfalls über die Wasserablauföffnung 9"" aus dem Wasserkasten 1"" abgeschieden. Zusätzlich können eine hier nicht dargestellte Heizvorrichtung und eine Kühlvorrichtung für die angesaugte Luft vorhanden sein, wie dies aus dem Stand der Technik an sich bekannt ist.

**BEZUGSZEICHENLISTE**

| | | | |
|---|---|---|---|
| 1 | Wasserkasten | 27 | Pfeil |
| 2 | Umlenkkammer | 28 | Pfeil |
| 3 | Deckenwand | 29 | Schwenkachse |
| 4 | Bodenwand | 30 | Wand |
| 5 | Vorderwand | 31 | Teil |
| 6 | Rückwand | 32 | Pfeil |
| 7 | Seitenwand | 33 | Pfeil |
| 8 | Seitenwand | 34 | Rohr |
| 9 | Wasserablauföffnung | 35 | Rohr |
| 10 | Lufteintrittsöffnung | 36 | Öffnung |
| 11 | Luftaustrittsöffnung | 37 | Durchlass |
| 12 | Umlenkorgan | 38 | Mulde |
| 12a | Teil | 39 | Kanten |
| 13 | Seitenkante | 40 | Ablauföffnung |
| 14 | Rinne | 41 | Kraftfahrzeug |
| 15 | Strömungsöffnung | 42 | Karosserie |
| 16 | Oberseite | 43 | Windschutzscheibe |
| 17 | Unterseite | 44 | Motorhaube |
| 18 | Frontkante | 45 | Stirnwand |
| 19 | Vorderseite | 46 | Fahrgastraum |
| 20 | Rückseite | 47 | Motorraum |
| 21 | Pfeil | 48 | Gitter |
| 22 | Pfeil | 49 | Luftansaugvorrichtung |
| 23 | Pfeil | 50 | Gebläse |
| 24 | Pfeil | 51 | Pfeil |
| 25 | Schwenkachse | 52 | Gehäuse |
| 26 | Pfeil | | |

## Patentansprüche

1. Wasserkasten für eine Kraftfahrzeug mit einer Umlenkkammer (2), die eine Deckenwand (3), eine Bodenwand (4) mit einer Wasserablauföffnung (9), eine Lufteintrittsöffnung (10) und eine Luftaustrittsöffnung (11) aufweist, mit einem in der Umlenkkammer (2) angeordneten Umlenkorgan (12), an dem durch die Lufteintrittsöffnung (10) einströmende und mit Wassertropfen beladene Luft umgelenkt wird, **dadurch gekennzeichnet, dass** sich das Umlenkorgan (12) im Wesentlichen von der Deckenwand (3) zur Bodenwand (4) erstreckt, dass die Lufteintrittsöffnung (10) in einer Vorderwand (5) und die Luftaustrittsöffnung (11) in einer Rückwand (6) angeordnet sind und dass zwischen wenigstens einer Seitenwand (7, 8) der Umlenkkammer (2) und einer Seitenkante (13) des Umlenkorgans (12) eine Strömungsöffnung (15) angeordnet ist.

2. Wasserkasten nach Anspruch 1, **dadurch gekennzeichnet, dass** die Wasserablauföffnung (9) zwischen dem Umlenkorgan (12) und der Rückwand (6) angeordnet ist.

3. Wasserkasten nach Anspruch 1 oder 2, **dadurch gekennzeichnet, dass** das Umlenkorgan (12) eine zweite Seitenkante (13) aufweist, die mit einer zweiten Seitenwand (7, 8) der Umlenkkammer (2) eine zweite Strömungsöffnung (15) bildet.

4. Wasserkasten nach Anspruch 3, **dadurch gekennzeichnet, dass** die beiden Seitenkanten (13) gegenüberliegend angeordnet sind.

5. Wasserkasten nach einem der Ansprüche 1 bis 4, **dadurch gekennzeichnet, dass** das Umlenkorgan (12) giebeldach- oder pultdachförmig ausgebildet ist, wobei sich der First (18) im Wesentlichen vertikal erstreckt.

6. Wasserkasten nach einem der Ansprüche 1 bis 5, **dadurch gekennzeichnet, dass** das Umlenkorgan (12) an der Seitenkante (13) eine sich im Wesentlichen vertikal erstreckende Rinne (14) aufweist, die zur Vorderwand (5) hin offen ist und in der Wasser nach unten rinnen kann.

7. Wasserkasten nach einem der Ansprüche 1 bis 6, **dadurch gekennzeichnet, dass** das Umlenkorgan (12) zwei gegenüberliegende Seitenkanten (13) aufweist, die jeweils mit einer Seitenwand (7, 8) eine Strömungsöffnung (15) bilden.

8. Wasserkasten nach Anspruch 7, **dadurch gekennzeichnet, dass** jede Seitenkante (13) eine sich im Wesentlichen vertikal erstreckende Rinne (14) aufweist.

9. Wasserkasten nach einem der Ansprüche 1 bis 8, **dadurch gekennzeichnet, dass** das Umlenkorgan (12") eine sich im Wesentlichen vertikal erstreckende Wand (30) aufweist, die an einer Vorderseite (19") des Umlenkorgans (12") angeordnet ist und die sich von dieser gegen die Vorderwand (5") hin erstreckt.

10. Wasserkasten nach einem der Ansprüche 1 bis 9, **dadurch gekennzeichnet**, das die Lufteintrittsöffnung (10) und die Luftaustrittsöffnung (11) im Wesentlichen auf gleicher Höhe über der Bodenwand (4) angeordnet sind.

11. Wasserkasten nach einem der Ansprüche 1 bis 10, **dadurch gekennzeichnet, dass** die Bodenwand (4) so konisch ausgebildet ist, dass sich die Wasserablauföffnung (9) an einer tiefsten Stelle der Bodenwand (4) befindet.

12. Wasserkasten nach einem der Ansprüche 1 bis 11, **dadurch gekennzeichnet, dass** die Umlenkkammer (2`) wenigstens teilweise gerundete Kanten (39) aufweist.

13. Wasserkasten nach einem der Ansprüche 1 bis 12, **dadurch gekennzeichnet, dass** das Umlenkorgan (12) wenigstens ein Teil (12a) aufweist, das zwischen wenigstens einer ersten und einer zweiten Position verstellbar ist, wobei dieses Teil (12a) in der ersten Position zur Wasserabscheidung strömende Luft umlenkt und in der zweiten Position einen Durchgang freigibt, so dass die Luft möglichst ungehindert die Umlenkkammer (2) durchströmen kann.

14. Wasserkasten nach Anspruch 13, **dadurch gekennzeichnet, dass** das wenigstens eine Teil (12a) um eine im Wesentlichen vertikale Achse verschwenkbar ist und dass vorzugsweise zwei Teile (12a) vorgesehen sind, die jeweils verschwenkbar sind.

15. Wasserkasten nach Anspruch 14, **dadurch gekennzeichnet, dass** die beiden Teile (12a) ähnlich einer Flügeltür spiegelbildlich zueinander verschwenkbar sind.

16. Wasserkasten nach einem der Ansprüche 13 bis 15, **dadurch gekennzeichnet, dass** die Bewegung des wenigstens einen Teils (12a) beispielsweise mittels eines Feuchtigkeitssensors gesteuert ist.

17. Wasserkasten nach einem der Ansprüche 1 bis 16, **dadurch gekennzeichnet, dass** das Umlenkorgan (12) so ausgebildet ist, dass Wasser und/oder Luft nach dem Coandä-Effekt geleitet wird.

18. Wasserkasten nach einem der Ansprüche 1 bis 17, **dadurch gekennzeichnet, dass** das Umlenkorgan (12) mit einer Oberseite (16) an der Deckenwand (3) und/oder mit einer Unterseite (17) an der Bodenwand (4) anliegt.

19. Wasserkasten nach einem der Ansprüche 6 bis 18, **dadurch gekennzeichnet, dass** die Bodenwand (4) innerhalb der Rinne (14) eine Ablauföffnung (40) aufweist.

20. Kraftfahrzeug mit einem Wasserkasten (1) nach einem der Ansprüche 1 bis 19, **dadurch gekennzeichnet, dass** der Wasserkasten (1) an der Luftaustrittsöffnung (11) an eine Luftansaugvorrichtung (49) angeschlossen ist, mit der an der Lufteintrittsöffnung (10) angesaugte Frischluft in den Fahrgastraum (46) abgebbar ist.

## Claims

1. A water box for a motor vehicle with a deflection chamber (2), which has a cover wall (3), a base wall (4) with a water discharge opening (9), an air inlet opening (10) and an air outlet opening (11), with a deflection member (12) arranged in the deflection chamber (2), at which deflection member air flowing in through the air inlet opening (10) and charged with water drops is deflected, **characterized in that** the deflection member (12) extends substantially from the cover wall (3) to the base wall (4), that the air inlet opening (10) is arranged in a front wall (5) and the air outlet opening (11) is arranged in a rear wall (6), and that a flow opening (15) is arranged between at least one side wall (7, 8) of the deflection chamber (2) and a side edge (13) of the deflection member (12).

2. The water box according to Claim 1, **characterized in that** the water discharge opening (9) is arranged between the deflection member (12) and the rear wall (6).

3. The water box according to Claim 1 or 2, **characterized in that** the deflection member (12) has a second side edge (13) which, with a second side wall (7, 8) of the deflection chamber (2), forms a second flow opening (15).

4. The water box according to Claim 3, **characterized in that** the two side edges (13) are arranged lying opposite.

5. The water box according to one of Claims 1 to 4, **characterized in that** the deflection member (12) is constructed in the shape of a gable roof or pitch roof, wherein the ridge (18) extends substantially vertically.

6. The water box according to one of Claims 1 to 5, **characterized in that** the deflection member (12) has on the side edge (13) a channel (14) extending substantially vertically, which is open towards the front wall (5) and in which water can flow downwards.

7. The water box according to one of Claims 1 to 6, **characterized in that** the deflection member (12) has two opposite side edges (13), which respectively form a flow opening (15) with a side wall (7, 8).

8. The water box according to Claim 7, **characterized in that** each side edge (13) has a channel (14) extending substantially vertically.

9. The water box according to one of Claims 1 to 8, **characterized in that** the deflection member (12") has a wall (30) extending substantially vertically, which is arranged on a front side (19") of the deflection member (12") and which extends therefrom towards the front wall (5").

10. The water box according to one of Claims 1 to 9, **characterized in that** the air inlet opening (10) and the air outlet opening (11) are arranged substantially at the same height over the base wall (4).

11. The water box according to one of Claims 1 to 10, **characterized in that** the base wall (4) is constructed conically such that the water discharge opening (9) is situated at a deepest point of the base wall (4).

12. The water box according to one of Claims 1 to 11, **characterized in that** the deflection chamber (2') has at least partially rounded edges (39).

13. The water box according to one of Claims 1 to 12, **characterized in that** the deflection member (12) has at least one part (12a) which is movable between at least a first and a second position, wherein this part (12a) in the first position deflects air flowing for water separation and in the second position frees a passage, so that the air can flow through the deflection chamber (2) in as unimpeded a manner as possible.

14. The water box according to Claim 13, **characterized in that** the at least one part (12a) is pivotable about a substantially vertical axis and that preferably two parts (12a) are provided, which are respectively pivotable.

15. The water box according to Claim 14, **characterized in that** the two parts (12a) are pivotable in mirror image with respect to one another in a manner similar to a double wing door.

16. The water box according to one of Claims 13 to 15, **characterized in that** the movement of the at least one part (12a) is controlled for example by means of a moisture sensor.

17. The water box according to one of Claims 1 to 16, **characterized in that** the deflection member (12) is constructed so that water and/or air is directed according to the Coanda effect.

18. The water box according to one of Claims 1 to 17, **characterized in that** the deflection member (12) lies with an upper side (16) on the cover wall (3) and/or with an underside (17) on the base wall (4).

19. The water box according to one of Claims 6 to 18, **characterized in that** the base wall (4) has a discharge opening (40) within the channel (14).

20. A motor vehicle with a water box (1) according to one of Claims 1 to 19, **characterized in that** the water box (1) is connected at the air outlet opening (11) to an air suction device (49), by which fresh air which is drawn in at the air inlet opening (10) is able to be delivered into the passenger compartment (46).

## Revendications

1. Boîte d'eau pour un véhicule automobile, comportant une chambre de renvoi (2), qui présente une paroi de couvercle (3), une paroi de fond (4) avec une ouverture d'évacuation d'eau (9), une ouverture d'entrée d'air (10) et une ouverture de sortie d'air (11), comportant un organe de renvoi (12) disposé dans la chambre de renvoi (2), sur lequel l'air s'écoulant à travers l'ouverture d'entrée d'air (10) et chargé en gouttes d'eau est renvoyé, **caractérisé en ce que** l'organe de renvoi (12) s'étend essentiellement de la paroi de couvercle (3) à la paroi de fond (4), **en ce que** l'ouverture d'entrée d'air (10) est disposée dans une paroi avant (5) et l'ouverture de sortie d'air (1) est disposée dans une paroi arrière (6) et **en ce que** entre au moins une paroi latérale (7,8) de la chambre de renvoi (2) et une arête latérale (13) de l'organe de renvoi (12) une ouverture d'écoulement (15) est disposée.

2. Boîte d'eau selon la revendication 1, **caractérisé en ce que** l'ouverture d'évacuation d'eau (9) est disposée entre l'organe de renvoi (12) et la paroi arrière (6).

3. Boîte d'eau selon les revendications 1 ou 2, **caractérisé en ce que** l'organe de renvoi (12) présente une deuxième arête latérale (13), qui forme avec une deuxième paroi latérale (7,8) de la chambre de renvoi (2) une deuxième ouverture d'écoulement (15).

4. Boîte d'eau selon la revendication 3, **caractérisé en ce que** les deux arêtes latérales (13) sont disposées en vis-à-vis.

5. Boîte d'eau selon une des revendications 1 à 4, **caractérisé en ce que** l'organe de renvoi (12) est conçu en forme de toit à double pente ou de toit à pente simple, dans lequel le faîte (18) s'étend essentiellement verticalement.

6. Boîte d'eau selon une des revendications 1 à 5, **caractérisé en ce que** l'organe de renvoi (12) sur l'arête latérale (13) présente une rigole (14) s'étendant essentiellement verticalement, qui est ouverte dans la direction de la paroi avant (5) et dans laquelle de l'eau peut s'écouler vers le bas.

7. Boîte d'eau selon une des revendications 1 à 6, **caractérisé en ce que** l'organe de renvoi (12) présente deux arêtes latérales (13) opposées, qui forment respectivement avec une paroi latérale (7,8) une ouverture d'écoulement (15).

8. Boîte d'eau selon la revendication 7, **caractérisé en ce que** chaque arête latérale (13) présente une rigole (14) s'étendant essentiellement verticalement.

9. Boîte d'eau selon une des revendications 1 à 8, **caractérisé en ce que** l'organe de renvoi (12") présente une paroi (30) s'étendant essentiellement verticalement, qui est disposée sur un côté avant (19") de l'organe de renvoi (12") et qui s'étend à partir de celui-ci contre la paroi avant (5").

10. Boîte d'eau selon une des revendications 1 à 9, **caractérisé en ce que** l'ouverture d'entrée d'air (10) et l'ouverture de sortie d'air (11) sont disposées essentiellement à la même hauteur sur la paroi de fond (4).

11. Boîte d'eau selon une des revendications 1 à 10, **caractérisé en ce que** la paroi de fond (4)est configurée de manière conique, de sorte que l'ouverture d'évacuation d'eau (9) se trouve sur un emplacement le plus profond de la paroi de fond (4).

12. Boîte d'eau selon une des revendications 1 à 11, **caractérisé en ce que** la chambre de renvoi (2') présente des arêtes (39) au moins partiellement arrondies.

13. Boîte d'eau selon une des revendications 1 à 12, **caractérisé en ce que** l'organe de renvoi (12) présente au moins une partie (12a), qui peut être réglée entre au moins une première et une deuxième position, dans lequel cette partie (12a) dans la première position renvoie l'air s'écoulant à des fins de séparation d'eau et dans la deuxième position débloque un passage, de sorte que l'air puise s'écouler au travers de la chambre de renvoi (2) avec le moins d'entraves possibles.

14. Boîte d'eau selon la revendication 13, **caractérisé en ce que** au moins une partie (12a) peut être pivotée autour d'un axe essentiellement vertical et **en ce que** de préférence deux parties (12a) sont prévues, qui sont respectivement pivotantes.

15. Boîte d'eau selon la revendication 14, **caractérisé en ce que** les deux parties (12a) sont pivotantes de manière symétrique l'une par rapport à l'autre à la manière d'une porte battante.

16. Boîte d'eau selon une des revendications 13 à 15, **caractérisé en ce que** le mouvement d'au moins une partie (12a) est commandé par exemple au moyen d'un capteur d'humidité.

17. Boîte d'eau selon une des revendications 1 à 16, **caractérisé en ce que** l'organe de renvoi (12) est conçu de telle sorte que l'eau et/ou l'air soit guidé selon l'effet Coand 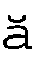 .

18. Boîte d'eau selon une des revendications 1 à 17, **caractérisé en ce que** l'organe de renvoi (12) vient reposer par son côté supérieur (16) sur la paroi de plafond (3) et/ou par son côté inférieur (17) sur la paroi de fond (4).

19. Boîte d'eau selon une des revendications 6 à 18, **caractérisé en ce que** la paroi de fond (4) présente à l'intérieur de la rigole (14) une ouverture d'évacuation (40).

20. Véhicule automobile comportant un boîte d'eau (1) selon une des revendications 1 à 19, **caractérisé en ce que** le boîte d'eau (1) est raccordé à l'ouverture de sortie d'air (1) sur un dispositif d'aspiration d'air (49), avec lequel l'air frais aspiré au niveau de l'ouverture d'entrée d'air (10) peut être libéré dans l'habitacle du véhicule.
